# EUROPEAN PATENT APPLICATION

(11) **EP 2 269 905 A1**
(43) Date of publication of application: **05.01.2011**
(21) Application number: 09164454.2
(22) Date of filing: 02.07.2009
(51) Int. Cl.: B62M 1/16, B62M 1/12

(54) **Bicycle with two driving units**

(71) Applicant: Laing Ban International Inc., Sinjhuang City, Taipei County 242 (TW)
(72) Inventor: Huang, Wen-Hung, 220, Taipei County (TW)
(74) Representative: Dossmann, Gérard

(57) **Abstract**

A bicycle includes a frame (1) having a handle unit (2) pivotably connected to a case (14) which is fixed to the steerering tube of the front fork (12). The handle unit (2) includes a shaft (23) about which the handle unit (2) is pivotable back and forth, and the shaft (23) is connected with an arm (31) which is operatively connected with a front wheel driving unit so as to drive the front wheel (13) of the bicycle. The bicycle includes pedals to rotate the rear wheel by the conventional rear wheel driving unit by a chain cooperated with gear wheels. The bicycle includes two driving units which are operated by the users' legs and hands.

## Description

The present invention relates to a bicycle, and more particularly, to a bicycle operated and driven by the pedals and/or the handle.

A conventional bicycle is operated by rotating the pedals which activates the driving unit to rotate the rear wheel such that the bicycle moves forward.

However, the user has to hold the handle consistently which only control the direction of the front wheel and cannot assist the driving unit to move the bicycle. There is a fixed distance in height between the seat and the handle so that the user feels sore and stiffness on his/her back and hip after a period of operation time. Besides, only the user's legs are exercised, the upper body and the hands are not.

Furthermore, there is only one driving unit for the conventional bicycles and which can only be operated by the user's legs, the user's hand cannot provide any driving force to the bicycles.

The present invention intends to provide a bicycle which includes a conventional rear wheel driving unit operated by the pedals and a front wheel driving unit which is operated by pivoting the handle back and forth.

The present invention relates to a bicycle which comprises a frame having a head tube to which a front fork is connected and a front wheel is connected to the front fork. A seat is connected to the frame and two pedals are connected to two cranks rotatably connected to the frame. A rear wheel is connected to a rear end of the frame. A handle unit includes two grips and is connected to the front fork so as to control the front wheel. A shaft is securely connected to a lower end of the handle unit and the handle unit is pivotable back and forth relative to the head tube. A front wheel driving unit is located between the handle unit and the front wheel. The shaft is operatively connected with the front wheel driving unit which is activated by pivoting the handle unit back and forth to rotate the front wheel.

The primary object of the present invention is to provide a bicycle which can be driven by the front wheel driving unit operated by pivoting the handle back and forth and by the rear wheel driving unit which is operated by treading the pedals.

The present invention will become more obvious from the following description when taken in connection with the accompanying drawings which show, for purposes of illustration only, a preferred embodiment in accordance with the present invention.
Fig. 1 is a perspective view to show the first embodiment of the bicycle of the present invention;
Fig. 2 is an exploded view to show the front wheel driving unit and the handle unit of the first embodiment of the bicycle of the present invention;
Fig. 3 is a side view to show the front wheel driving unit and the handle unit of the first embodiment of the bicycle of the present invention;
Fig. 4 shows that the handle unit is pivoted forward to activate the front wheel driving unit;
Fig. 5 shows that the handle unit is pivoted backward while the front wheel still rotates forward;
Fig. 6 is a perspective view to show the second embodiment of the bicycle of the present invention;
Fig. 7 is an exploded view to show the front wheel driving unit and the handle unit of the second embodiment of the bicycle of the present invention;
Fig. 8 is a side view to show the front wheel driving unit and the handle unit of the second embodiment of the bicycle of the present invention;
Fig. 9 shows that the handle unit of the second embodiment is pivoted forward to activate the front wheel driving unit;
Fig. 10 shows that the handle unit of the second embodiment is pivoted backward while the front wheel still rotates forward;
Fig. 11 is a perspective view to show the third embodiment of the bicycle of the present invention;
Fig. 12 is an exploded view to show the front wheel driving unit and the handle unit of the third embodiment of the bicycle of the present invention;
Fig. 13 is a side view to show the front wheel driving unit and the handle unit of the third embodiment of the bicycle of the present invention;
Fig. 14 shows that the handle unit of the third embodiment is pivoted forward to activate the front wheel driving unit;
Fig. 15 shows that the handle unit of the third embodiment is pivoted backward while the front wheel still rotates forward;
Fig. 16 is a perspective view to show the fourth embodiment of the bicycle of the present invention;
Fig. 17 is an exploded view to show the front wheel driving unit and the handle unit of the fourth embodiment of the bicycle of the present invention;
Fig. 18 is a side view to show the front wheel driving unit and the handle unit of the fourth embodiment of the bicycle of the present invention;
Fig. 19 shows that the handle unit of the fourth embodiment is pivoted forward to activate the front wheel driving unit;
Fig. 20 shows that the handle unit of the fourth embodiment is pivoted backward while the front wheel still rotates forward;
Fig. 21 shows that the handle unit of the first embodiment is connected to the front fork directly;
Fig. 22 shows that the handle unit of the first embodiment is connected to a stationary bike, and
Fig. 23 shows that a spring is located in the case in the embodiment in Fig. 22 and connected with a bar on the handle unit.

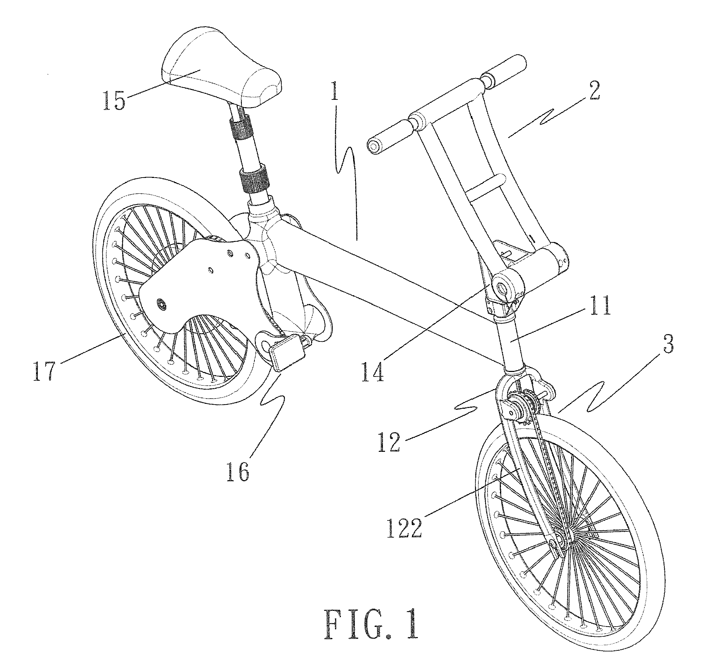

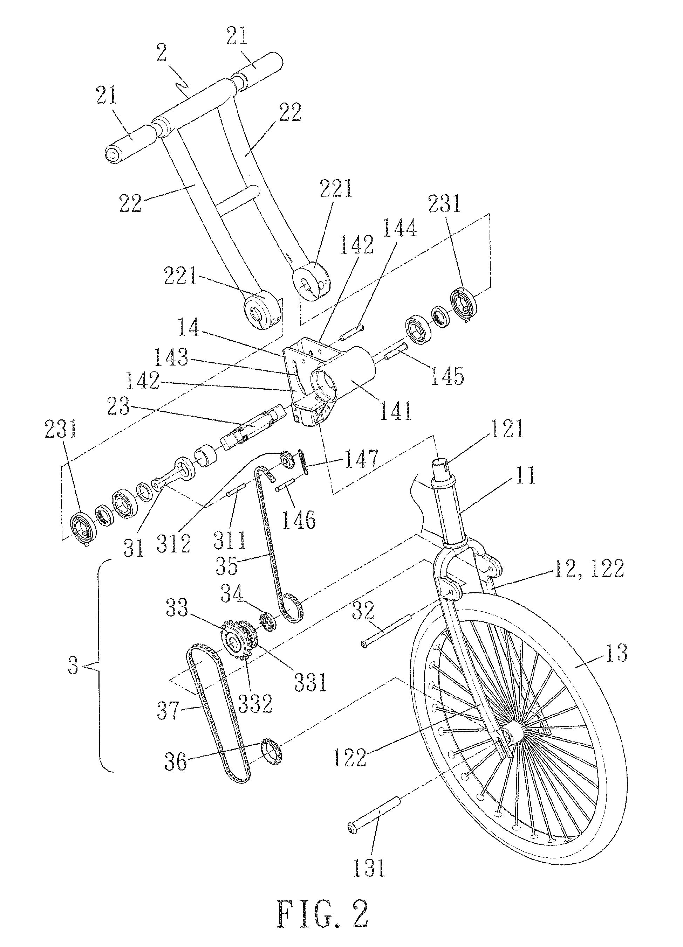

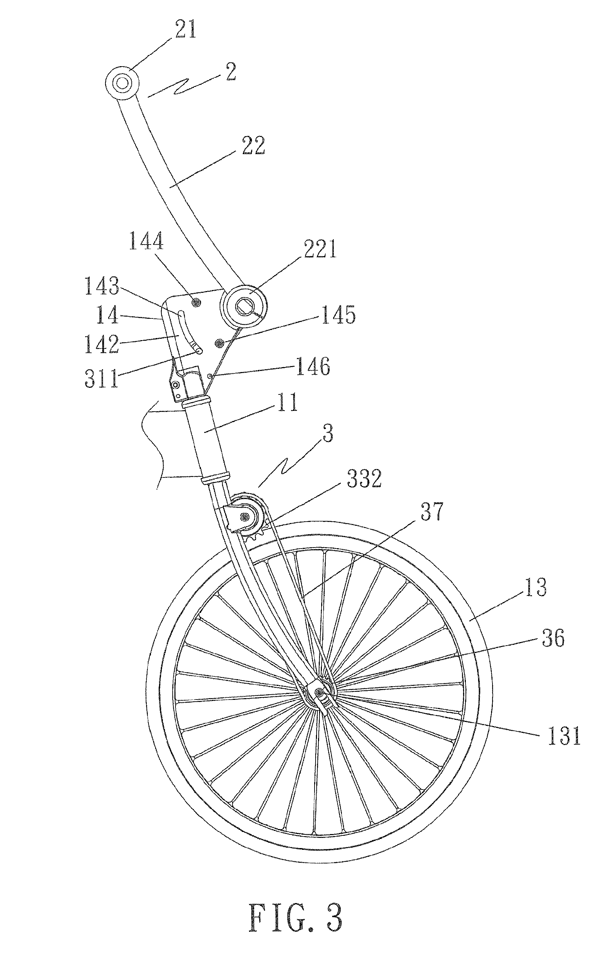

Referring to Figs. 1 to 3, the bicycle of the present invention can be made of Iron, Aluminum, Magnesium, Titanium, compound material, carbon fibers, glass fibers, plastic, wood or bamboos. The bicycle comprises a frame 1 having a head tube 11 and a front fork 12 is connected to the head tube 11. The front fork 12 includes two legs 122 and a front wheel 13 is connected between the two legs 122 of the front fork 12 by an axle 131. A seat 15 is connected to the frame 1 and two pedals 16 are connected to two cranks rotatably connected to the frame 1. A rear wheel 17 is connected to a rear end of the frame 1 and driven by treading the two pedals 16 to activate a rear wheel driving unit which is partially disclosed and the same as conventional rear wheel driving unit including a chain connected between a chain ring and at least one sprocket.

A handle unit 2 includes two grips 21 and two extension rods 22 extend from the handle unit 2. Two end pieces 221 are connected to the two extension rods 22. A case 14 is securely connected to the steerering tube 121 of the front fork 12 and the steerering tube 121 extends through the head tube 11. The case 14 has a transverse tube 141 and a shaft 23 extends through the transverse tube 141. The two end pieces 221 are fixedly connected to two ends of the shaft 23 so that when the handle unit 2 is pivoted back and forth, the shaft 23 rotates.

A front wheel driving unit 3 located between the handle unit 2 and the front wheel 13 and includes an arm 31 which has a first end fixed to the shaft 23 and a second end of the arm 31 is connected to a shaft 311 to which a movable chain wheel 312 is connected. The second end of the arm 31 is located lower than the first end of the arm 31. A one-way wheel 33 and a coil spring 34 are connected to one of the two legs 122 of the front fork 12 by a connection pin 32. The one-way wheel 33 is co-axially connected with a driving chain wheel 331 and a transmission chain wheel 332. A first chain 35 is connected between the driving chain wheel 331 and the movable chain wheel 312. The coil spring 34 is received in the driving chain wheel 331 and two ends of the coil spring 34 are respectively connected to the connection pin 32 and an inside of the driving chain wheel 331. A top end of the first chain 35 is fixed to an inside of the case 14 and a lower end of the first chain 35 is connected to the driving chain wheel 331. A synchro chain wheel 36 is co-axially connected to the axle 131 of the front wheel 13 and a loop-shaped second chain 37 is connected between the synchro chain wheel 36 and the transmission chain wheel 332. Two coil springs 231 are mounted to the shaft 23 and two ends of each of the coil springs 231 are fixed to the shaft 23 and an inside of the transverse tube 141 so as to return the handle unit 2.

The case 14 includes two parallel sidewalls 142 and each sidewall 142 includes a curved slot 143. The shaft 311 on the arm 31 is movably engaged with the two curved slots 143. Two stop pins 144, 145 are connected between the two sidewalls 142, the arm 31 is pivotable between the two stop pins 144, 145. A fixed pin 146 and a spring 147 are located within the case 14. Two ends of the fixed pin 146 are fixed to the two sidewalls 142 and two ends of the spring 147 are connected to the shaft 311 and the fixed pin 146 to return the arm 31.

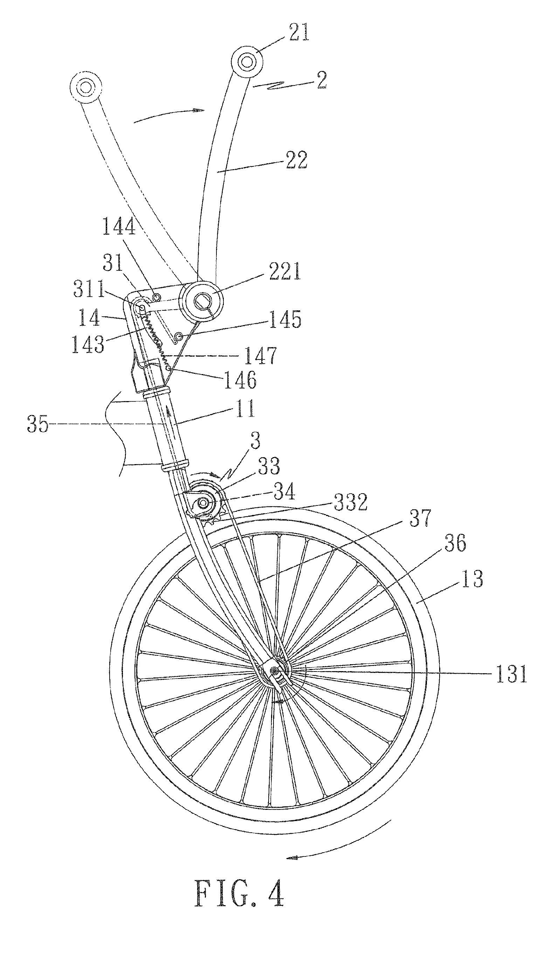

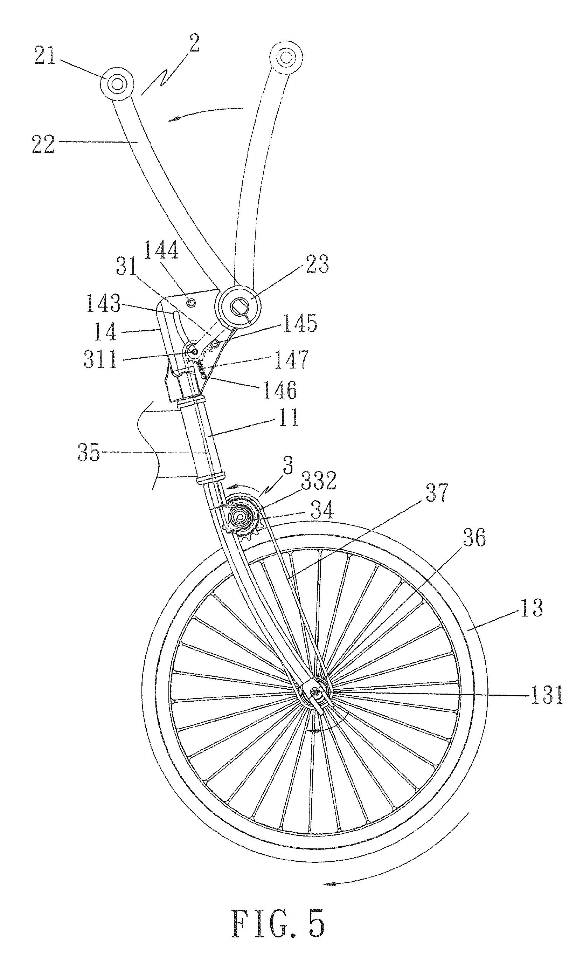

As shown in Figs. 4 and 5, when operating the front wheel driving unit 3, the user pivots the handle unit 2 back and forth between the two stop pins 144, 145 to rotate the shaft 23 and the two coil springs 231 are tightened and the shaft 311 and the movable chain wheel 312 are moved upward to extend the spring 147. The upward movement of the movable chain wheel 312 pulls the first chain 35 which rotates the driving chain wheel 331 and the coil spring 34 is tightened. The operation of the driving chain wheel 331 rotates the transmission chain wheel 332 and the second chain 37 which drives the synchro chain wheel 36 and the front wheel 13. Therefore, the bicycle moves forward. When the handle unit 2 is stop to be pivoted, the coil spring 231 on the shaft 23, the spring 147 and the coil spring 34 of the front wheel driving unit 3 are loosened as shown in Fig. 5, the coil spring 231 rotates the shaft 23 reversely and pivots the handle unit 2 backward until the arm 31 is stopped by the stop pin 145. The arm 31, in the meanwhile, swings backward by the rotation of the shaft 23 and the force of the coil spring 147 to lower the first chain 35. The loosened coil spring 34 drives the driving chain wheel 331 which does not drive the transmission chain wheel 332, so that the transmission chain wheel 332, the second chain 37 and the synchro chain wheel 36 keep moving and the front wheel 13 drives the bicycle forward.

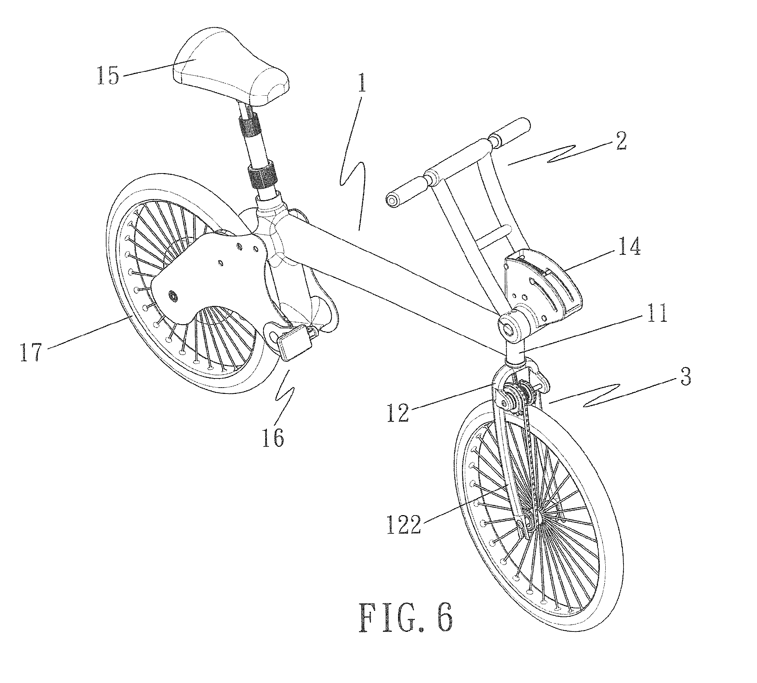

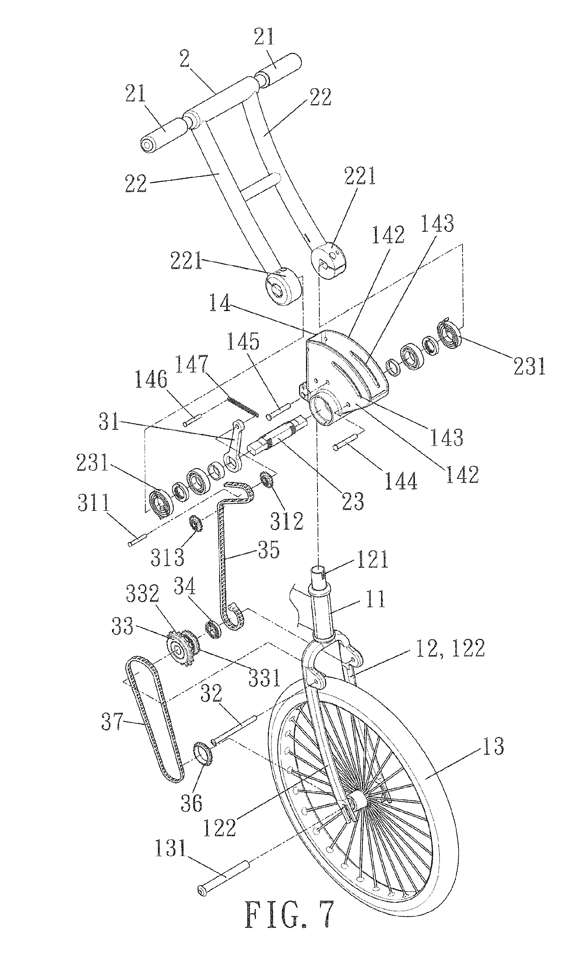

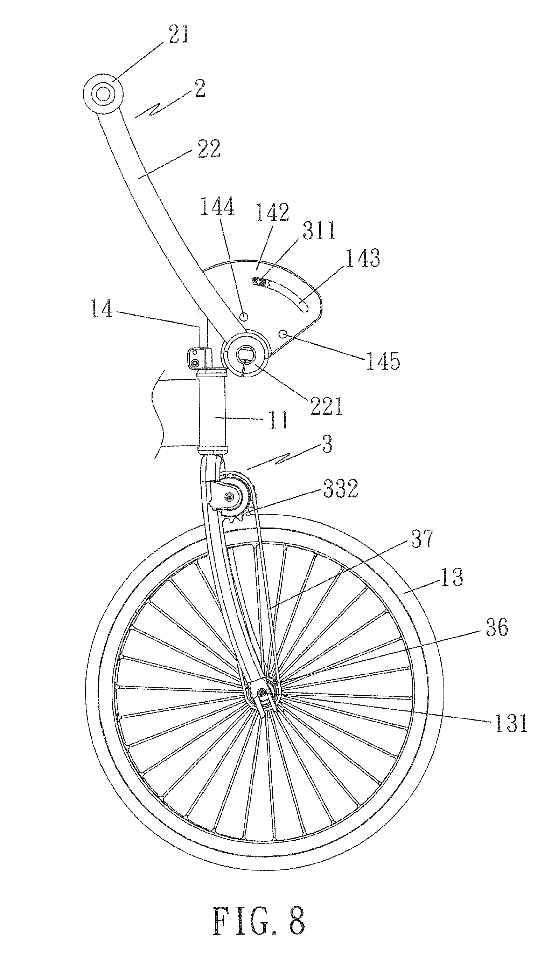

As shown in Figs. 6 to 8, a second embodiment of the bicycle is disclosed and similar to the first embodiment, the differences are the shape and orientation of the case 14, the orientation of the arm 31, and the arrangement of the first chain 35 and a stationary chain wheel 313 is added.

The arm 31 in the second embodiment is arranged such that the second end of the arm 31 is located higher than the first end of the arm 31. The stationary chain wheel 313 is located between the movable chain wheel 312 and the one-way wheel 33. The stationary chain wheel 313 is connected to the inside of the case 14 and the first chain 35 reeves the stationary chain wheel 313 and is connected to the driving chain wheel 331.

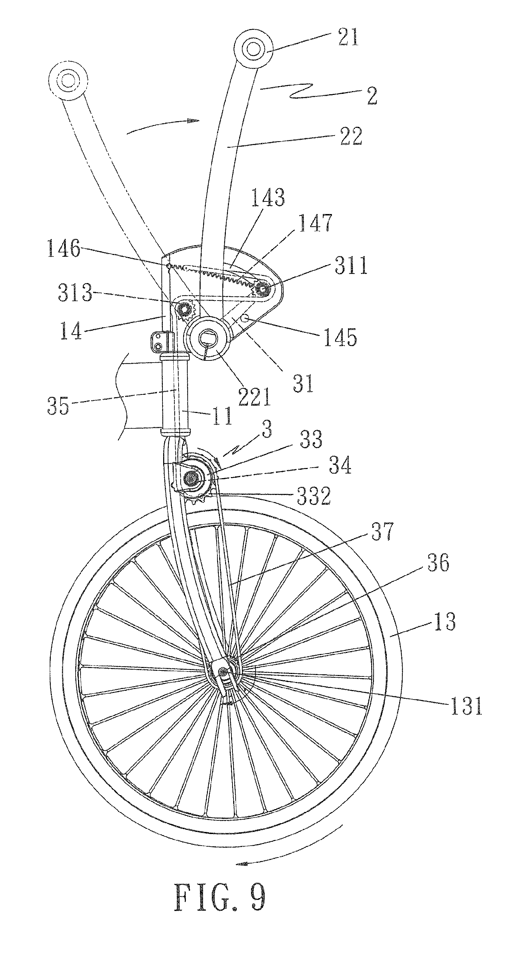

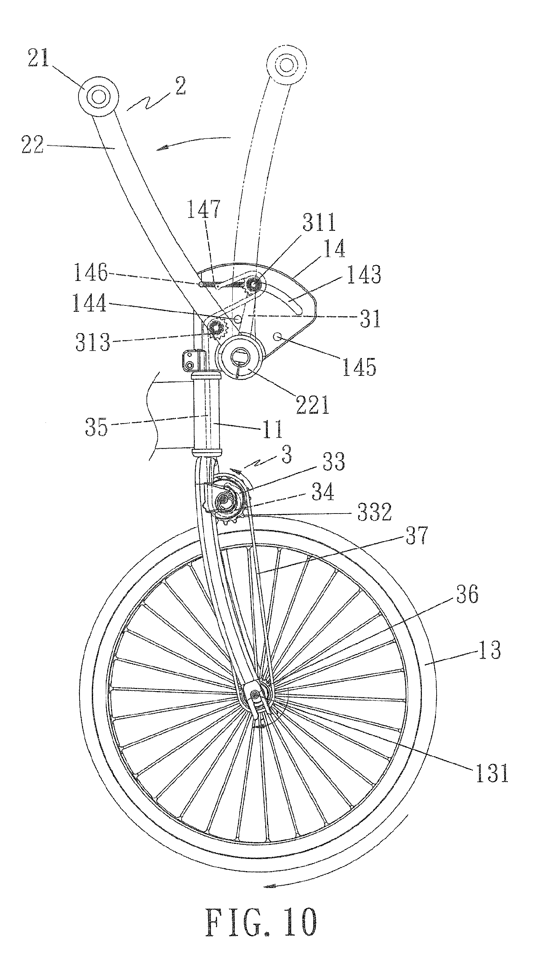

The operation of the front wheel driving unit 3 of the second embodiment of the bicycle is disclosed in Figs. 9 and 10 and the same as that of the first embodiment.

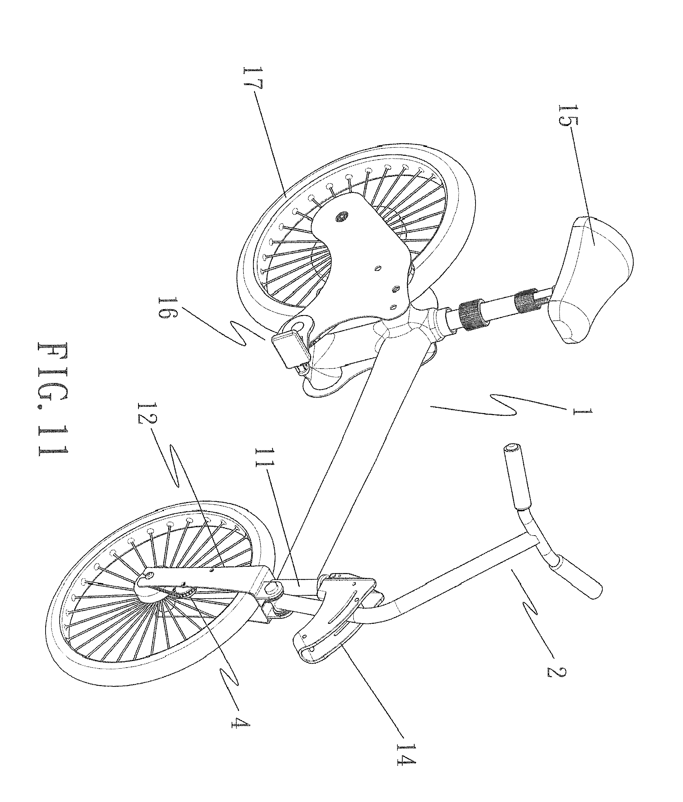

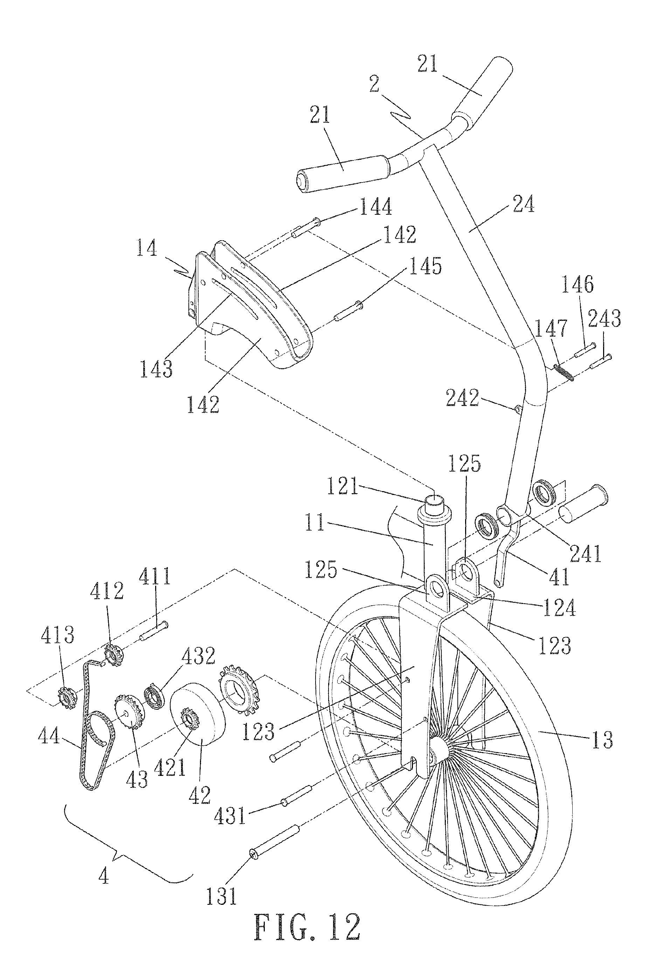

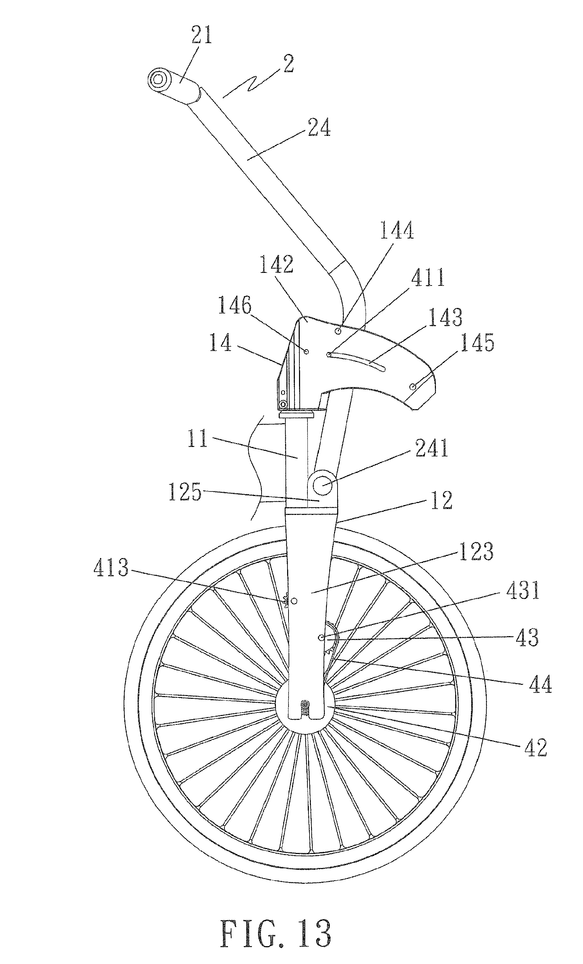

Figs. 11 to 13 show a third embodiment of the bicycle of the present invention and comprises a frame 1 having a head tube 11 and a front fork 12 is connected to the head tube 11. The front fork 12 includes two legs 123 and a front wheel 13 is connected between the two legs 123 of the front fork 12 by an axle 131. A seat 15 is connected to the frame 1 and two pedals 16 are connected to two cranks rotatably connected to the frame 1. A rear wheel 17 is connected to a rear end of the frame 1 and driven by treading the two pedals 16 to activate a rear wheel driving unit which is partially disclosed and the same as conventional rear wheel driving unit including a chain connected between a chain ring and at least one sprocket.

A handle unit 2 includes two grips 21 and an extension rod 24 extends from the handle unit 2. A sleeve 241 is connected to a lower end of the extension rod 24. The front fork 12 includes a steerering tube 121 which extends through the head tube 11 and a case 14 is securely connected to the steerering tube 121. The front fork 12 includes two connection portions 124 on the two legs 123 respectively and each connection portion 124 includes a connection plate 125 which is located in front of the steerering tube 121. The sleeve 241 is pivotably connected between the two connection plates 125. A front wheel driving unit 4 includes an arm 41 which extends from the sleeve 241 and the arm 41 is connected with a movable chain wheel 412 by a shaft 411. A first stationary chain wheel 413 is connected to an inside of one of the two legs 123 and located beneath the movable chain wheel 412. A one-way wheel 42 is connected with the axle 131 of the front wheel 13 and includes a driving chain wheel 421. A second stationary chain wheel 43 is connected to the inside of the leg 123 and located above the one-way wheel 42. The second stationary chain wheel 43 includes a coil spring 432 and two ends of the coil spring 432 are fixed to a pin 431 for connecting the second stationary chain wheel 43 to the leg 123 and an inside of the second stationary chain wheel 43. A chain 44 has a first end fixed to the inside of the leg 123 and located above the movable chain wheel 412. A second end of the chain 44 reeves through the first stationary chain wheel 413 and the driving chain wheel 421 of the one-way wheel 42 and is engaged with the second stationary chain wheel 43.

The case 14 includes two parallel sidewalls 142 and two stop pins 144, 145 are connected between the two sidewalls 142, the arm 41 is pivotable between the two stop pins 144, 145. Each sidewall 142 includes a curved slot 143, a fixed pin 146 and a spring 147 are located within the case 14. Two ends of the fixed pin 146 are fixed to the two sidewalls 142. The extension rod 24 includes a lug 242 extending therefrom and the lug 242 extends toward the steerering tube 121. A movable pin 243 extends through the lug 242. Two ends of the spring 147 are connected to the fixed pin 146 and the movable pin 243. Two ends of the movable pin 243 are movably engaged with the two curved slots 143 so as to return the arm 41.

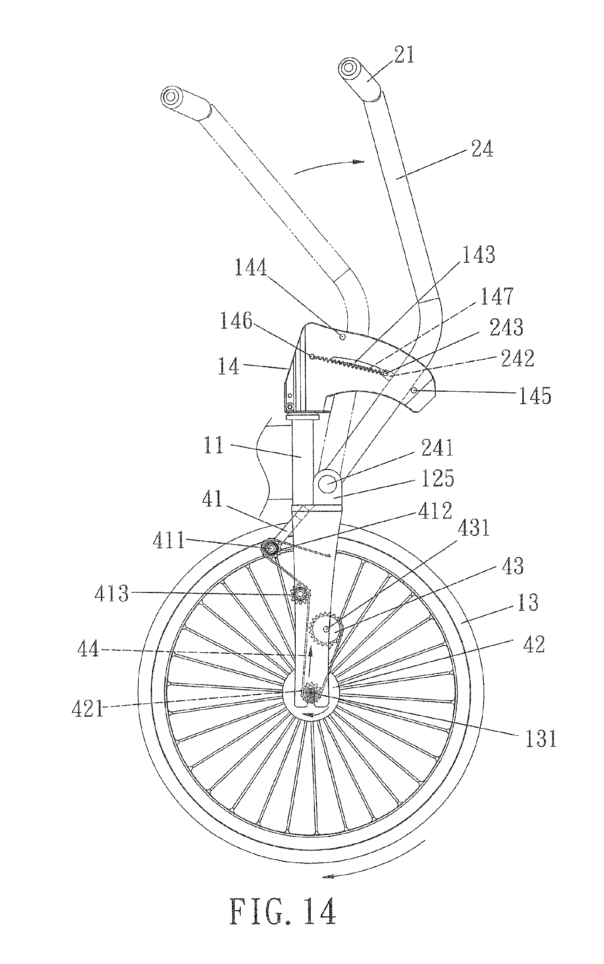

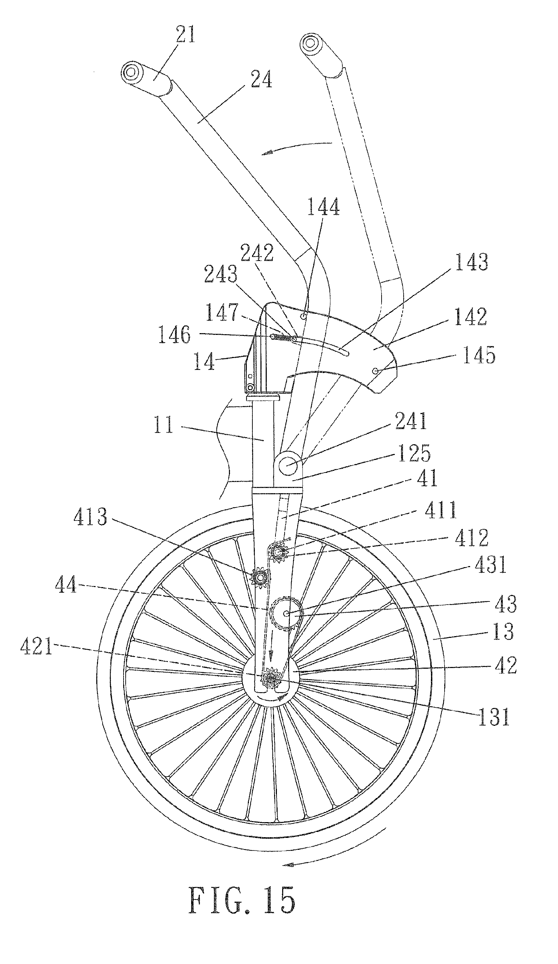

As shown in Figs. 14 and 15, when the user pivots the handle unit 2 between the two stop pins 144, 145, the sleeve 241 is rotated and the arm 41 swings to move the shaft 411 and the movable chain wheel 412 upward to extend the spring 147. The movement of the movable chain wheel 412 pulls the chain 44 and the driving chain wheel 421 is rotated, such that the one-way wheel 42 drives the front wheel 13 to move forward. During rotation of the front wheel 13, the chain 44 co-rotates with the second stationary chain wheel 43 and the coil spring 432 is then tightened. When the handle unit 2 is not pivoted, the spring 147 returns the sleeve 241 as shown in Fig. 15 and the handle unit 2 returns backward until the extension rod 24 is stopped by the stop pin 145. The arm 41 swings backward by the spring 147 to lower the chain 44. The coil spring 432 is loosened and the second stationary chain wheel 43 and the driving chain wheel 421 rotate reversely. The one-way wheel 42 does not drive the front wheel 13 which is still in rotation status to keep the bicycle moving forward.

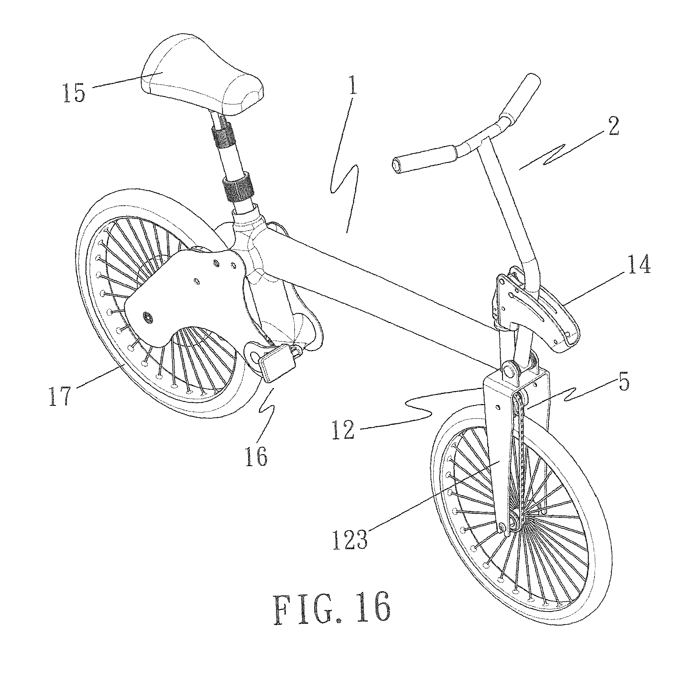

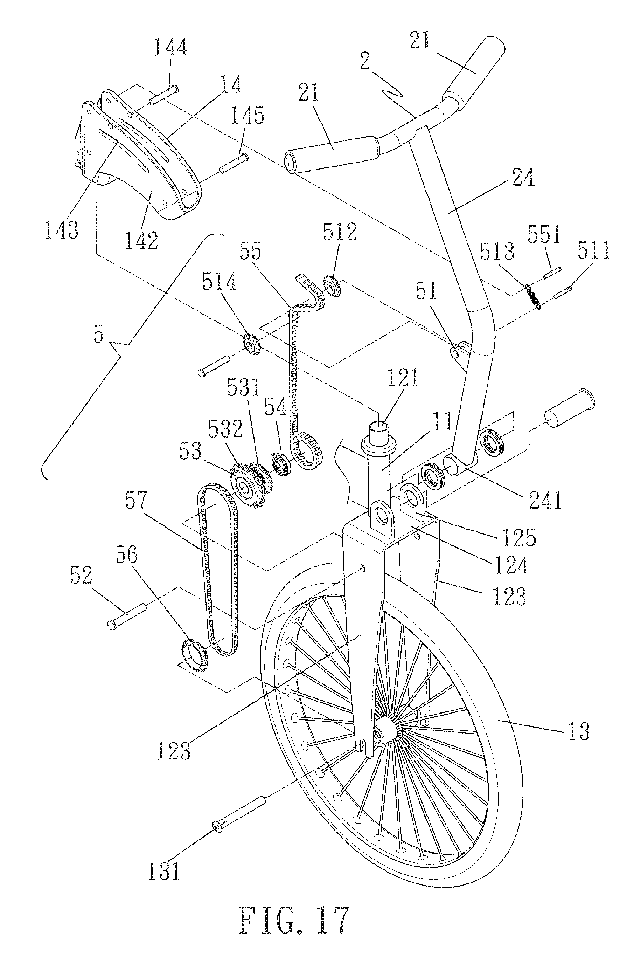

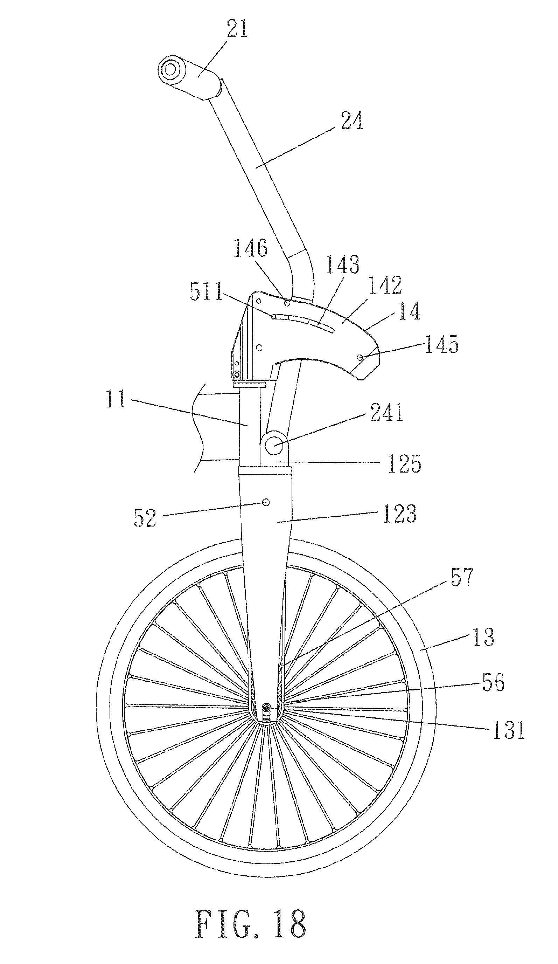

Figs. 16 to 18 show a fourth embodiment of the present invention and which is similar to the third embodiment of the preset invention, wherein the handle unit 2 is the same as that in the third embodiment except for the lug on the extension rod 24 is renumbered as "51" and no arm is connected to the sleeve 241 on the extension rod 24. The case 14 and the front fork 12 are the same as those in the third embodiment. The difference is mainly seen for the front wheel driving unit 5.

The front wheel driving unit 5 includes the lug 51 extending from the extension rod 24 and the lug 51 extends toward the steerering tube 121. A movable pin 511 extends through the lug 51 and a movable chain wheel 512 is mounted to the movable pin 511. A stationary chain wheel 514 is pivotably connected to an inside of the case 14 and located beneath the movable chain wheel 512. A one-way wheel 53 and a coil spring 514 are co-axially connected to the inside of the leg 123 by a pin 52. The one-way wheel 53 is co-axially connected with a driving chain wheel 531 and a transmission chain wheel 532. A first chain 55 has a first end engaged with the driving chain wheel 531 and a second end of the first chain 55 reeves through the stationary chain wheel 514 and is engaged with the movable chain wheel 512. A coil spring 54 is received in the driving chain wheel 531 and two ends of the coil spring 54 are fixed to the pin 52 and an inside of the driving chain wheel 531. The second end of the first chain 55 is fixed to an inside of the case 14 by a fixed pin 551. A synchro chain wheel 56 is co-axially connected to the axle 131 of the front wheel 13 and a loop-shaped second chain 57 is engaged between the synchro chain wheel 56 and the transmission chain wheel 532 on the one-way wheel 53.

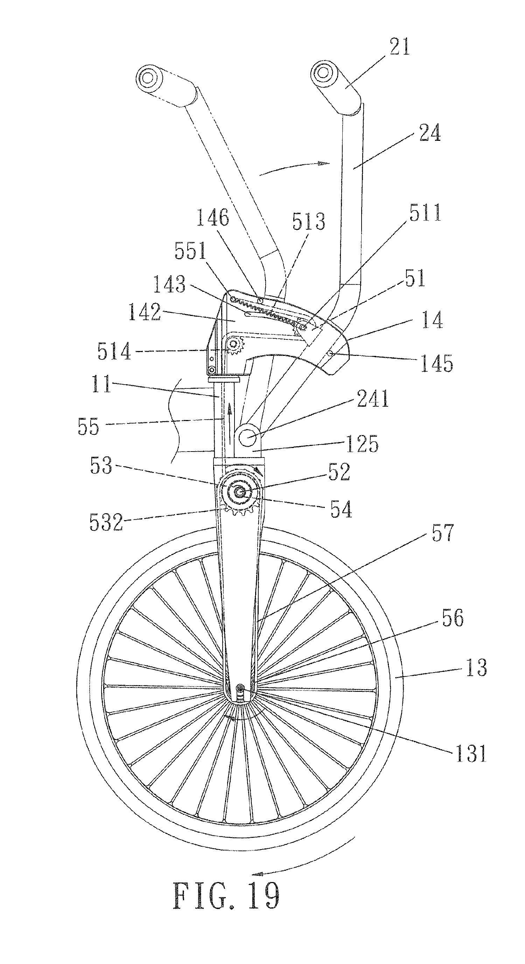

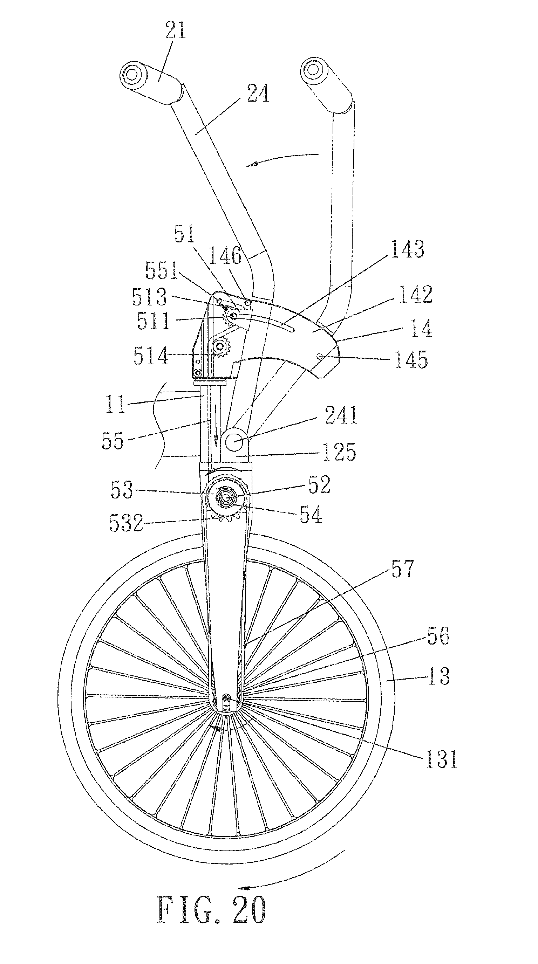

As shown in Figs. 19 and 20, when the user pivots the handle unit 2 between the two stop pins 144, 145, the sleeve 241 is rotated and the lug 51 and the movable chain wheel 512 are moved forward to extend the spring 513. The first chain 55 is moved to drive the driving chain wheel 531 and the coil spring 54 is tightened. When the driving chain wheel 531 rotates, it drives the transmission chain wheel 532 and the second chain 57 which rotates the synchro chain wheel 56 so that the front wheel 13 rotates to move the bicycle forward. When the handle unit 2 is not pivoted, the spring 513 and the coil spring 54 are loosened as shown in Fig. 20, the spring 513 makes the sleeve 241 return reversely and the handle unit 2 pivots backward until the extension rod 24 is stopped by the stop pin 145. When the movable chain wheel 512 is pulled backward by the spring 513, the first chain 55 is lowered and the coil spring 54 rotates the driving chain wheel 531 reversely which does not drive the transmission chain wheel 532 so that the transmission chain wheel 532, the second chain 57 and the synchro chain wheel 56 are maintained as shown in Figs. 19, 20, the bicycle keeps moving forward.

The bicycle of the present invention can be operated by using the pedals 16 only, using the handle unit 2 only, or using both of the pedals 16 and the handle unit 2. The bicycle allows the users to exercise the hands of the upper body and the legs of the lower body.

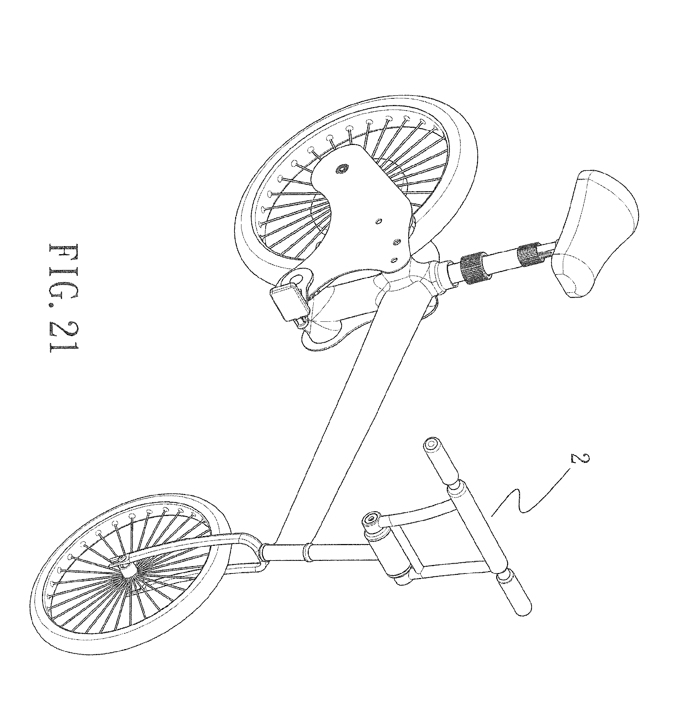

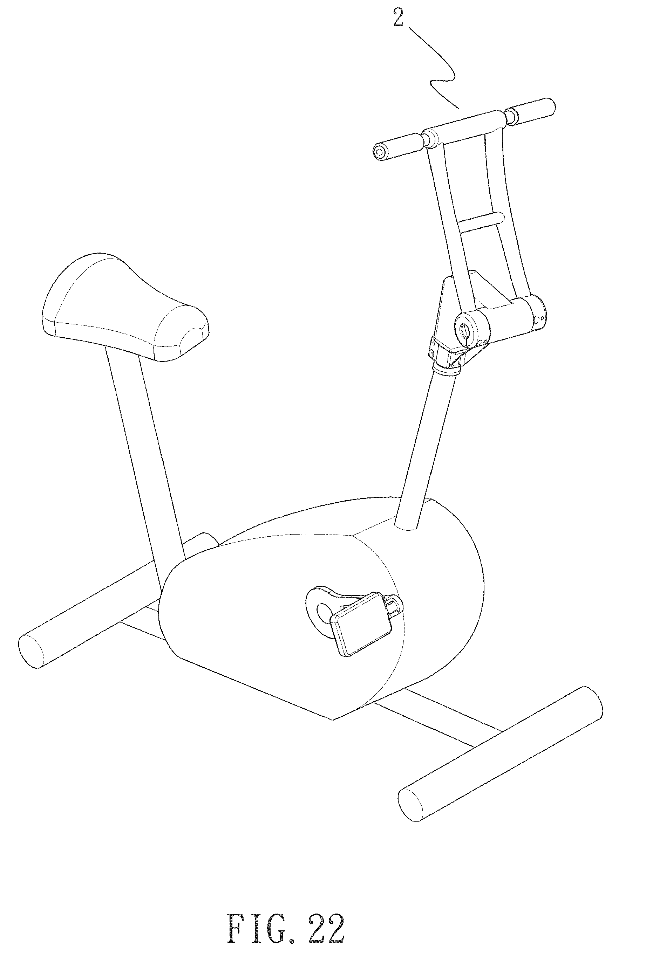

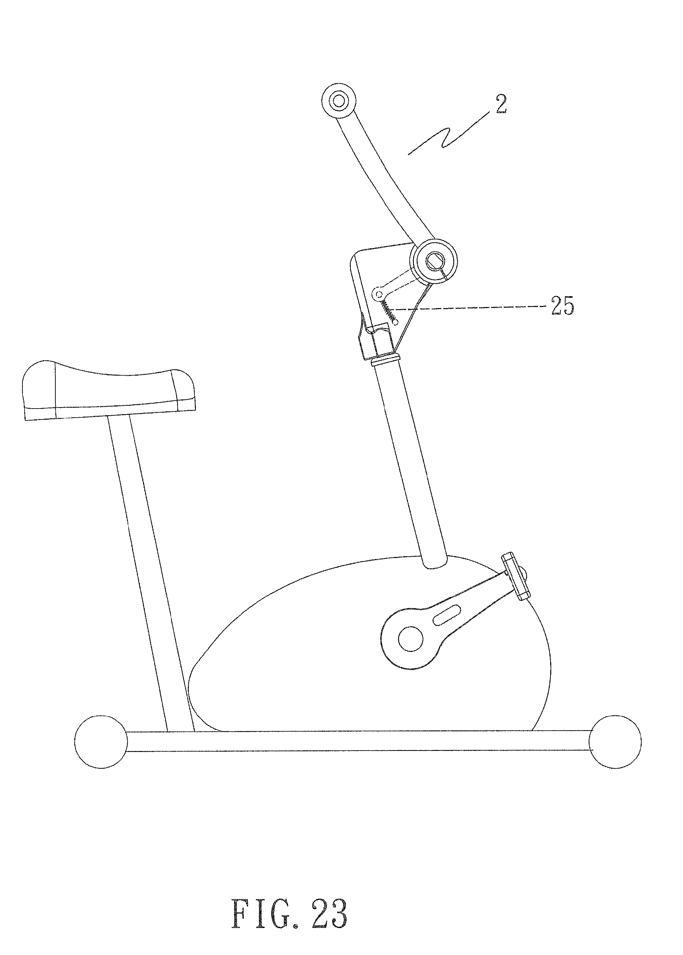

Fig. 21 shows that the handle unit 2 can be individually connected to the front fork of a conventional bicycle and the user can operate the pedals and pivots the handle unit 2 to exercise the upper body. Fig. 22 shows that the handle unit 2 can be individually connected to the stationary bike to provide the feature of exercising the user's hands. As shown in Fig. 23, when pivoting the handle unit 2, the spring 25 is stretched to exercise the user's hands.

While we have shown and described the embodiment in accordance with the present invention, it should be clear to those skilled in the art that further embodiments may be made without departing from the scope of the present invention.

## Claims

1. A bicycle comprising:
a frame (1) having a head tube (11) and a front fork (12) connected to the head tube (11), a front wheel (13) connected to the front fork (12), a seat (15) connected to the frame (1) and two pedals (16) connected to two cranks rotatably connected to the frame (1), a rear wheel (17) connected to a rear end of the frame (1);
a handle unit (2) including two grips (21) and connected to the front fork (12) so as to control the front wheel (13), a shaft (23) securely connected to a lower end of the handle unit (2) and the handle unit (2) being pivotable back and forth relative to the head tube (11), and
a front wheel driving unit (3) located between the handle unit (2) and the front wheel (13), the shaft (23) operatively connected with the front wheel driving unit (3) which is activated by pivoting the handle unit (2) back and forth.

2. The bicycle as claimed in claim 1, wherein the front fork (12) includes a steerering tube (121) and two legs (122) between which the front wheel (13) is connected by an axle (131), a case (14) is securely connected to the steerering tube (121) and has a transverse tube (141), the shaft (23) extends through the transverse tube (141), two extension rods (22) extend from the handle unit (2) and two end pieces (221) are connected to the two extension rods (22), the two end pieces (221) are fixedly connected to two ends of the shaft (23), the front wheel driving unit (3) includes an arm (31) which has a first end fixed to the shaft (23) and a second end of the arm (31) is connected to a shaft (311) to which a movable chain wheel (312) is connected, a one-way wheel (33) and a coil spring (34) are connected to one of the two legs (122) of the front fork (12) by a connection pin (32), the one-way wheel (33) is co-axially connected with a driving chain wheel (331) and a transmission chain wheel (332), a first chain (35) is connected between the driving chain wheel (331) and the movable chain wheel (312), the coil spring (34) is received in the driving chain wheel (331), two ends of the coil spring (34) are respectively connected to the connection pin (32) and an inside of the driving chain wheel (331), a top end of the first chain (35) is fixed to an inside of the case (14) and a lower end of the first chain (35) is connected to the driving chain wheel (331), a synchro chain wheel (36) is co-axially connected to the axle (131) of the front wheel (13), a loop-shaped second chain (37) is connected between the synchro chain wheel (36) and the transmission chain wheel (332).

3. The bicycle as claimed in claim 2, wherein a stationary chain wheel (313) is located between the movable chain wheel (312) and the one-way wheel (33), the stationary chain wheel (313) is connected to the inside of the case (14) and the first chain (35) reeves the stationary chain wheel (313) and is connected to the driving chain wheel (331).

4. The bicycle as claimed in claim 2, wherein a coil spring (231) is mounted to the shaft (23) and two ends of the coil spring (231) are fixed to the shaft (23) and an inside of the transverse tube (141) so as to return the handle unit (2).

5. The bicycle as claimed in claim 2, wherein the case (14) includes two parallel sidewalls (142) and each sidewall (142) includes a curved slot (143), the shaft (311) on the arm (31) is movably engaged with the two curved slots (143).

6. The bicycle as claimed in claim 2, wherein the case (14) includes two parallel sidewalls (142) and two stop pins (144, 145) are connected between the two sidewalls (142), the arm (31) is pivotable between the two stop pins (144, 145).

7. The bicycle as claimed in claim 2, wherein the case (14) includes two parallel sidewalls (142) and a fixed pin (146) and a spring (147) are located within the case (14), two ends of the fixed pin (146) are fixed to the two sidewalls (142) and two ends of the spring (147) are connected to the shaft (311) and the fixed pin (146) to return the arm (31).

8. The bicycle as claimed in claim 1, wherein the front fork (12) includes a steerering tube (121) and two legs (123) between which the front wheel (13) is connected by an axle (131), a case (14) is securely connected to the steerering tube (121), the front fork (12) includes two connection portions (124) on the two legs (123) respectively and each connection portion (124) includes a connection plate (125) which is located in front of the steerering tube (121), the handle unit (2) includes an extension rod (24) which extends through the case (14) and a sleeve (241) is connected to a lower end of the extension rod (24), the sleeve (241) is pivotably connected between the two connection plates (125), the front wheel driving unit (4) includes an arm (41) which extends from the sleeve (241), the arm (41) is connected with a movable chain wheel (412) by a shaft (411), a first stationary chain wheel (413) is connected to an inside of one of the two legs (123) and located beneath the movable chain wheel (412), a one-way wheel (42) is connected with the axle (131) of the front wheel (13) and includes a driving chain wheel (421), a second stationary chain wheel (43) is connected to the inside of the leg (123) and located above the one-way wheel (42), the second stationary chain wheel (43) includes a coil spring (432) and two ends of the coil spring (432) are fixed to a pin (431) for connecting the second stationary chain wheel (43) to the leg (123) and an inside of the second stationary chain wheel (43), a chain (44) has a first end fixed to the inside of the leg (123) and located above the movable chain wheel (412) and a second end of the chain (44) reeves through the first stationary chain wheel (413) and the driving chain wheel (421) of the one-way wheel (42) and is engaged with the second stationary chain wheel (43).

9. The bicycle as claimed in claim 8, wherein the case (14) includes two parallel sidewalls (142) and two stop pins (144, 145) are connected between the two sidewalls (142), the arm (41) is pivotable between the two stop pins (144, 145).

10. The bicycle as claimed in claim 8, wherein the case (14) includes two parallel sidewalls (142) and each sidewall (142) includes a curved slot (143), a fixed pin (146) and a spring (147) are located within the case (14), two ends of the fixed pin (146) are fixed to the two sidewalls (142), the extension rod (24) includes a lug (242) extending therefrom and the lug (242) extends toward the steerering tube (121), a movable pin (243) extends through the lug (242), two ends of the spring (147) are connected to the fixed pin (146) and the movable pin (243), two ends of the movable pin (243) are movably engaged with the two curved slots (143) so as to return the arm (41).

11. The bicycle as claimed in claim 1, wherein the front fork (12) includes a steerering tube (121) and two legs (123) between which the front wheel (13) is connected by an axle (131), a case (14) is securely connected to the steerering tube (121), the front fork (12) includes two connection portions (124) on the two legs (123) respectively and each connection portion (124) includes a connection plate (125) which is located in front of the steerering tube (121), the handle unit (2) includes an extension rod (24) which extends through the case (14) and a sleeve (241) is connected to a lower end of the extension rod (24), the sleeve (241) is pivotably connected between the two connection plates (125), the front wheel driving unit (5) includes a lug (51) extending from the extension rod (24) and the lug (51) extends toward the steerering tube (121), a movable pin (511) extends through the lug (51) and a movable chain wheel (512) is mounted to the movable pin (511), a stationary chain wheel (514) is pivotably connected to an inside of the case (14) and located beneath the movable chain wheel (512), a one-way wheel (53) and a coil spring (514) are co-axially connected to the inside of the leg (123) by a pin (52), the one-way wheel (53) is co-axially connected with a driving chain wheel (531) and a transmission chain wheel (532), a first chain (55) has a first end engaged with the driving chain wheel (531) and a second end of the first chain (55) reeves through the stationary chain wheel (514) and is engaged with the movable chain wheel (512), a coil spring (54) is received in the driving chain wheel (531) and two ends of the coil spring (54) are fixed to the pin (52) and an inside of the driving chain wheel (531), the second end of the first chain (55) is fixed to an inside of the case (14) by a fixed pin (551), a synchro chain wheel (56) is co-axially connected to the axle (131) of the front wheel (13) and a loop-shaped second chain (57) is engaged between the synchro chain wheel (56) and the transmission chain wheel (532) on the one-way wheel (53).

12. The bicycle as claimed in claim 11, wherein the case (14) includes two parallel sidewalls (142) and two stop pins (144, 145) are connected between the two sidewalls (142), the extension rod (24) is pivotable between the two stop pins (144, 145).

13. The bicycle as claimed in claim 11, wherein the case (14) includes two parallel sidewalls (142) and each sidewall (142) includes a curved slot (143), a spring (513) is located within the case (14) and two ends of the spring (513) are connected to the movable pin (511) of the movable chain wheel (512) and the fixed pin (551) for connecting the first chain (55), two ends of the fixed pin (551) are engaged with the curved slots (143) so as to return the extension rod (24).

## Amended claims

### Amended claims in accordance with Rule 137(2) EPC.

**1.** A bicycle comprising:
a frame (1) having a head tube (11) and a front fork (12) connected to the head tube (11), a a front wheel (13) connected to the front fork (12), a seat (15) connected to the frame (1) and two pedals (16) connected to two cranks rotatably connected to the frame (1), a rear wheel (17) connected to a rear end of the frame (1);
a handle unit (2) including two grips (21) and connected to the front fork (12) so as to control the front wheel (13), a shaft (23) securely connected to a lower end of the handle unit (2) and the handle unit (2) being pivotable back and forth relative to the head tube (11) ;
a front wheel driving unit (3) located between the handle unit (2) and the front wheel (13), the shaft (23) operatively connected with the front wheel driving unit (3) which is activated by pivoting the handle unit (2) back and forth;
**characterized in that**:
the front fork (12) includes a steering tube (121) and two legs (122) between which the front wheel (13) is connected by an axle (131), a case (14) is securely connected to the steering tube (121) and has a transverse tube (141), the shaft (23) extends through the transverse tube (141), two extension rods (22) extend from the handle unit (2) and two end pieces (221) are connected to the two extension rods (22), the two end pieces (221) are fixedly connected to two ends of the shaft (23), the front wheel driving unit (3) includes an arm (31) which has a first end fixed to the shaft (23) and a second end of the arm (31) is connected to a shaft (311) to which a movable chain wheel (312) is connected, a one-way wheel (33) and a coil spring (34) are connected to one of the two legs (122) of the front fork (12) by a connection pin (32), the one-way wheel (33) is co-axially connected with a driving chain wheel (331) and a transmission chain wheel (332), a first chain (35) is connected between the driving chain wheel (331) and the movable chain wheel (312), the coil spring (34) is received in the driving chain wheel (331), two ends of the coil spring (34) are respectively connected to the connection pin (32) and an inside of the driving chain wheel (331), a top end of the first chain (35) is fixed to an inside of the case (14) and a lower end of the first chain (35) is connected to the driving chain wheel (331), a synchro chain wheel (36) is co-axially connected to the axle (131) of the front wheel (13), a loop-shaped second chain (37) is connected between the synchro chain wheel (36) and the transmission chain wheel (332).

**2.** The bicycle as claimed in claim 1, wherein a stationary chain wheel (313) is located between the movable chain wheel (312) and the one-way wheel (33), the stationary chain wheel (313) is connected to the inside of the case (14) and the first chain (35) reeves the stationary chain wheel (313) and is connected to the driving chain wheel (331).

**3.** The bicycle as claimed in claim 1, wherein a coil spring (231) is mounted to the shaft (23) and two ends of the coil spring (231) are fixed to the shaft (23) and an inside of the transverse tube (141) so as to return the handle unit (2).

**4.** The bicycle as claimed in claim 1, wherein the case (14) includes two parallel sidewalls (142) and each sidewall (142) includes a curved slot (143), the shaft (311) on the arm (31) is movably engaged with the two curved slots (143).

**5.** The bicycle as claimed in claim 1, wherein the case (14) includes two parallel sidewalls (142) and two stop pins (144, 145) are connected between the two sidewalls (142), the arm (31) is pivotable between the two stop pins (144, 145).

**6.** The bicycle as claimed in claim 1, wherein the case (14) includes two parallel sidewalls (142) and a fixed pin (146) and a spring (147) are located within the case (14), two ends of the fixed pin (146) are fixed to the two sidewalls (142) and two ends of the spring (147) are connected to the shaft (311) and the fixed pin (146) to return the arm (31).

**7.** The bicycle as claimed in claim 1, wherein the front fork (12) includes a steering tube (121) and two legs (123) between which the front wheel (13) is connected by an axle (131), a case (14) is securely connected to the steering tube (121), the front fork (12) includes two connection portions (124) on the two legs (123) respectively and each connection portion (124) includes a connection plate (125) which is located in front of the steering tube (121), the handle unit (2) includes an extension rod (24) which extends through the case (14) and a sleeve (241) is connected to a lower end of the extension rod (24), the sleeve (241) is pivotably connected between the two connection plates (125), the front wheel driving unit (4) includes an arm (41) which extends from the sleeve (241), the arm (41) is connected with a movable chain wheel (412) by a shaft (411), a first stationary chain wheel (413) is connected to an inside of one of the two legs (123) and located beneath the movable chain wheel (412), a one-way wheel (42) is connected with the axle (131) of the front wheel (13) and includes a driving chain wheel (421), a second stationary chain wheel (43) is connected to the inside of the leg (123) and located above the one-way wheel (42), the second stationary chain wheel (43) includes a coil spring (432) and two ends of the coil spring (432) are fixed to a pin (431) for connecting the second stationary chain wheel (43) to the leg (123) and an inside of the second stationary chain wheel (43), a chain (44) has a first end fixed to the inside of the leg (123) and located above the movable chain wheel (412) and a second end of the chain (44) reeves through the first stationary chain wheel (413) and the driving chain wheel (421) of the one-way wheel (42) and is engaged with the second stationary chain wheel (43).

**8.** The bicycle as claimed in claim 8, wherein the case (14) includes two parallel sidewalls (142) and two stop pins (144, 145) are connected between the two sidewalls (142), the arm (41) is pivotable between the two stop pins (144, 145).

**9.** The bicycle as claimed in claim 8, wherein the case (14) includes two parallel sidewalls (142) and each sidewall (142) includes a curved slot (143), a fixed pin (146) and a spring (147) are located within the case (14), two ends of the fixed pin (146) are fixed to the two sidewalls (142), the extension rod (24) includes a lug (242) extending therefrom and the lug (242) extends toward the steering tube (121), a movable pin (243) extends through the lug (242), two ends of the spring (147) are connected to the fixed pin (146) and the movable pin (243), two ends of the movable pin (243) are movably engaged with the two curved slots (143) so as to return the arm (41).

**10.** The bicycle as claimed in claim 1, wherein the front fork (12) includes a steering tube (121) and two legs (123) between which the front wheel (13) is connected by an axle (131), a case (14) is securely connected to the steering tube (121), the front fork (12) includes two connection portions (124) on the two legs (123) respectively and each connection portion (124) includes a connection plate (125) which is located in front of the steering tube (121), the handle unit (2) includes an extension rod (24) which extends through the case (14) and a sleeve (241) is connected to a flower end of the extension rod (24), the sleeve (241) is pivotably connected between the two connection plates (125), the front wheel driving unit (5) includes a lug (51) extending from the extension rod (24) and the lug (51) extends toward the steering tube (121), a movable pin (511) extends through the lug (51) and a movable chain wheel (512) is mounted to the movable pin (511), a stationary chain wheel (514) is pivotably connected to an inside of the case (14) and located beneath the movable chain wheel (512), a one-way wheel (53) and a coil spring (514) are co-axially connected to the inside of the leg (123) by a pin (52), the one-way wheel (53) is co-axially connected with a driving chain wheel (531) and a transmission chain wheel (532), a first chain (55) has a first end engaged with the driving chain wheel (531) and a second end of the first chain (55) reeves through the stationary chain wheel (514) and is engaged with the movable chain wheel (512), a coil spring (54) is received in the driving chain wheel (531) and two ends of the coil spring (54) are fixed to the pin (52) and an inside of the driving chain wheel (531), the second end of the first chain (55) is fixed to an inside of the case (14) by a fixed pin (551), a synchro chain wheel (56) is co-axially connected to the axle (131) of the front wheel (13) and a loop-shaped second chain (57) is engaged between the synchro chain wheel (56) and the transmission chain wheel (532) on the one-way wheel (53).

**11.** The bicycle as claimed in claim 11, wherein the case (14) includes two parallel sidewalls (142) and two stop pins (144, 145) are connected between the two sidewalls (142), the extension rod (24) is pivotable between the two stop pins (144, 145).

**12.** The bicycle as claimed in claim 11, wherein the case (14) includes two parallel sidewalls (142) and each sidewall (142) includes a curved slot (143), a spring (513) is located within the case (14) and two ends of the spring (513) are connected to the movable pin (511) of the movable chain wheel (512) and the fixed pin (551) for connecting the first chain (55), two ends of the fixed pin (551) are engaged with the curved slots (143) so as to return the extension rod (24).
